# EUROPÄISCHE PATENTANMELDUNG

(11) **EP 0 682 099 A1**
(43) Veröffentlichungstag der Anmeldung: **15.11.1995**
(21) Anmeldenummer: 95106151.4
(22) Anmeldetag: 25.04.1995
(51) Int. Cl.: C10B 53/00

(54) **Verfahren und Vorrichtung zur Behandlung von Verbundverpackungen und/oder Kunststoffabfällen sowie Verwendung der bei der Pyrolyse enstehenden kohlenstoffhaltigen Feststoffanteilen**

(30) Priorität: 09.05.1994 DE 4416340
(71) Anmelder: AGR Abfallentsorgungs-Gesellschaft Ruhrgebiet mit beschränkter Haftung, D-45127 Essen (DE)
(72) Erfinder: Textor, Dirk, D-47279 Duisburg (DE)
(74) Vertreter: Vomberg, Friedhelm, Dipl.-Phys.

(57) **Zusammenfassung**

Die Erfindung betrifft ein Verfahren und eine Vorrichtung zur Behandlung von Verbundverpackungen und/oder Kunststoffabfällen, die pyrolysiert werden und wonach die festen Pyrolyserückstände in eine Metallfraktion und eine kohlenstoffreiche Fraktion getrennt werden. Die kohlenstoffreiche Fraktion wird zu Aktivkohle aufbereitet, die vorzugsweise in Aktivkohlefiltern oder zur Wasserreinigung verwendet wird.

## Beschreibung

Die Erfindung betrifft ein Verfahren und eine Vorrichtung zur Behandlung von Verbundverpackungen, Kunststoffabfällen, Altpapier und/oder Papier-Kunststoff-Verbundmaterial mittels Pyrolyse und anschließender Trennung der festen Pyrolysereststoffe von der Metallfraktion sowie eine Verwendung der von Metallstoffen befreiten Pyrolysereststoffe.

Die zunehmende Menge von Abfällen in Verbindung mit dem ständig knapper werdenden Deponieraum erfordert Überlegungen, den Abfall, der unvermeidbar deponiert werden muß, mengenmäßig zu reduzieren. Eine ausschließliche Abfallbeseitigung durch Verbrennung erfordert nicht nur einen hohen Energieaufwand, sondern auch erhebliche Mittel zur Abgasreinigung. Die aus den unvermeidlich beim Deponieren und/oder Verbrennen noch verbleibende Schadstoffbelastung sowie die ständig knapper werdenden Rohstoffe führten schließlich zu Überlegungen, Wertstoffe aus Abfällen aufzubereiten und wieder zu verwerten. Um diese Wiederverwertung wirtschaftlich vertretbar durchführen zu können, werden - teils durch gesetzliche Bestimmungen, teils durch geförderte Vorhaben - bereits die Abfallstoffe in eine Glas-, Papier- und Pappe-, Kunststoff- und Metall-(Blech)-Fraktion getrennt und in getrennter Form beim Entsorgungsunternehmen angeliefert.

Neben der Abfallverbrennung unter Sauerstoffüberschuß ist es nach dem Stand der Technik bekannt, Haus- und Industriemüll zu pyrolysieren. Unter eine Pyrolyse wird allgemein die Zersetzung von Stoffen durch Hitze verstanden, wobei nach der Pyrolyse gasförmige, flüssige und feste Pyrolyserückstände anfallen. Prinzipiell sind nach dem Stand der Technik drei Typen von Pyrolyseöfen bekannt, nämlich Schachtöfen, in denen das Pyrolysegut von oben eingebracht wird und den Schacht in vertikaler Richtung schwerkraftbedingt durchwandert, Drehrohröfen, bei denen das Pyrolysegut ständig durchmischt und hierbei immer wieder mit der geheizten Drehrohrwand in Kontakt kommt, und Wirbelschichtöfen mit einem verwirbelten Sandbett, das für die Wärmeübertragung auf das Pyrolysegut sorgt. Bei allen beschriebenen Pyrolyseöfen bestehen Probleme hinsichtlich der einer schlechten Wärmeübertragung bzw. Wärmeausnutzung und/oder eines hohen Verschleißes.

Zur Pyrolyse von organischen Substanzen ist daher in der DE 40 11 945 C1 vorgeschlagen worden, das Pyrolysegut unter Verdichtung in die Pyrolysekammer einzubringen und unter Beibehaltung eines verdichteten Zustandes über den Kammerquerschnitt durchlaufen zu lassen, wobei die Wärmezufuhr zum Pyrolysegut durch die mit dem verdichteten Pyrolysegut in Druckkontakt stehenden Kammerwandungen erfolgt. Die sich bildenden gasförmigen Pyrolyseprodukte werden bei erhöhtem Druck abgeführt. Die festen Pyrolyserückstände sollen vor ihrer Ausbringung nachverdichtet und unter Sauerstoffzufuhr verbrannt werden, wobei die Abgase der Verbrennung zumindest teilweise zur Beheizung der Pyrolysekammer genutzt werden sollen.

Weiterhin ist aus der DE 40 22 535 C1 eine Pyrolysevorrichtung für organische Substanzen, wie Haus- und Industriemüll oder dergleichen, mit einer Pyrolysekammer bekannt, durch die das Pyrolysegut unter Verdichtung eingebracht und durchgeführt werden soll. Diese Pyrolysekammer besteht aus einem beheizbaren Rohr mit einer Stopfeinrichtung, die das mit einer Vorverdichtungseinrichtung an seiner Beschickungsseite zugeführte Pyrolysegut unter Nachverdichtung in die Kammer einbringt. Die Vorverdichtungseinrichtung kann ein Schneckenverdichter oder eine intermittierend bewegliche Preßvorrichtung sein. Die Pyrolysekammer besitzt ferner mindestens eine Gasauslaßeinrichtung sowie einen der Pyrolysekammer austrittsseitig unmittelbar nachgeordneten und mit dieser gasdicht verbundenen Schmelzbadbehälter.

Beide vorbeschriebenen Pyrolyseverfahren sollen als Niedertemperaturpyrolyse unter 450°C ablaufen.

Nach der DE 43 04 294 A1 wird vorgeschlagen, aus einem Polyolefin und mindestens einer Aluminiumschicht bestehendes Verbundmaterial zu pyrolysieren und aus den Pyrolyserückständen das Aluminium abzuscheiden und einer Recycling zuzuführen.

Die DE 42 37 161 A1 beschreibt eine Vorrichtung zum Aufbereiten von aluminiumhaltigen Materialien, wie z.B. mit Aluminiumfolien beschichtete Verbundpackungen oder dergleichen, bei der die Pyrolysereststoffe unter Zwischenschaltung einer Schleuse einer Siebrüttelanlage zur Trennung der Aluminiumfolien von der Asche zugeführt werden.

Es ist Aufgabe der vorliegenden Erfindung, das eingangs genannte Verfahren und eine zur Durchführung dieses Verfahrens geeignete Vorrichtung derart weiterzuentwickeln, das eine verbesserte Ausnutzung der Pyrolyserestfeststoffe ermöglicht.

Die Aufgabe wird zum einen durch das im Anspruch 1 beschriebene Verfahren gelöst, bei dem die verbleibenden Pyrolysereststoffe als kohlenstoffreiche Fraktion zu Aktivkohle aufbereit werden.

Bei den oben beschriebenen Verfahren nach der DE 40 11 945 C1 und der DE 40 22 535 C1 wird der verdichtete feste Pyrolysereststoff nur als Brennstoff genutzt, also "verbraucht", während die vorliegende Erfindung den Feststoffanteil einer weiteren Verwertung zuführt, die bei dem verdichteten Feststoff-Pyrolysegut nach dem Stand der Technik aufgrund der dort vorliegenden Inhomogenität und der Schadstoffbelastung durch Verwendung beliebigen Haus- oder Industrieabfalls erst gar nicht möglich ist.

Weiterhin kann mit dem vorliegenden Verfahren die Metallfraktion, insbesondere die Aluminiumfraktion, ebenfalls einer Wiedervertung, z.B. bei Mehrschichtverbundverpackungen, zugeführt werden.

Weiterentwicklungen des erfindungsgemäßen Verfahrens sind in den Ansprüchen 2 bis 8 beschrieben. So wird nach einer weiteren Ausgestaltung der Erfindung die Pyrolyse bei Temperaturen von maximal 450°C, vorzugsweise zwischen 420°C bis 450°C, durchgeführt, also als Niedertemperaturpyrolyse, die im Gegensatz zur Hochtemperaturpyrolyse einen geringeren Energiebedarf erfordert.

Nach einer Weiterbildung der Erfindung wird die Metallfraktion und die verbleibende kohlenstoffreiche Fraktion durch Sieben, vorzugsweise mittels einer kontinuierlichen Förderung über ein Rüttel- oder Schwingsieb, oder durch Magnetabscheidung und/oder durch Wirbelstromabscheidung getrennt. Diese Trennung nutzt die erfindungsgemäße Kenntnis aus, daß die Kohlerückstände wegen ihrer Sprödigkeit nach der Pyrolyse eine im Durchschnitt kleinere Korngröße als die Metallfraktion aufweisen, so daß der Kohlerückstand aus der Pyrolyse als Unterlauf abgezogen wird, während die Metallfraktion als Oberlauf zur weiteren Verwertung geführt wird. Der beim Sieben erforderliche Verfahrensaufwand ist ebenso gering wie der Verschleiß der Rüttel- oder Schwingsiebe.

Nach einer weiteren Ausgestaltung der Erfindung wird das Pyrolysegut während der Pyrolyse homogenisiert und zerkleinert, vorzugsweise mittels eines Schneckenförderers in einem (beheizten) Pyrolyserohr, der das Pyrolysegut kontinuierlich durch dieses Rohr fördert. Ähnlich wie bei einem Drehrohrofen wird das Pyrolysegut während der Förderung ständig durchmischt, was einen optimalen Wärmeübergang ermöglicht. Allerdings treten bei der Schneckenförderung in einem feststehenden Rohr nicht die erheblichen Abdichtungsprobleme auf, wie bei einem Drehrohrofen. Darüber hinaus besitzt die Schneckenförderung den weiteren Vorteil, daß mit fortschreitendem Verkohlungsprozeß bereits eine teilweise Separation zwischen den kohlenstoffhaltigen Feststoffen und den Metallen, insbesondere dem Aluminium, eintritt.

Nach einer weiteren Ausgestaltung der Erfindung werden die gasförmigen Pyrolyserückstände mit Sauerstoffunterschuß verbrannt und unter Ausnutzung der entstehenden Wärme sowie als Inertgas teilweise zum Pyrolyseprozeß zurückgeführt. Die bei der pyrolytischen Zersetzung entstehenden Gase setzen sich im wesentlichen aus Wasserdampf, Kohlenmonoxid, Kohlendioxid und Kohlenwasserstoffen zusammen. Da im Edukt Verbundverpackung weder Stickstoff, Schwefel oder Chlor vorhanden ist, können die Abgase, die bei der im Ofen stattfindenden Verbrennung entstehen, mit geringerem Aufwand gereinigt werden als die Pyrolysegase, die bei der Pyrolysation von Gemischtabfällen ausgeschleust werden. Die bei der Pyrolysierung von Verbundverpackungen entstehenden Gase müssen allerdings vollständig verbrannt werden. Um zu verhindern, daß bei ihrer teilweisen Rückführung in den Pyrolyseprozeß Sauerstoff mitgeführt wird, wird die Verbrennung vorzugsweise unter Sauerstoffmangel erfolgen. Für die aus dem Prozeß auszuschleusenden Gase ist eine Nachverbrennung gemäß den gesetzlichen Anforderungen durchzuführen.

Vorrichtungstechnisch wird die Aufgabe durch die Maßnahme nach Anspruch 9 gelöst. Erfindungsgemäß wird dem Pyrolyseofen bzw. dem beheizten Pyrolyserohr ein Rüttel- oder Schwingsieb oder ein Magnet- und/oder Wirbelstromabscheider mit jeweiligen Auffangvorrichtungen nachgeschaltet, um die Metallfraktion von der kohlenstoffhaltigen Fraktion abzutrennen. Weiterbildungen dieser Vorrichtung sind in den Ansprüchen 9 bis 11 beschrieben und bestehen in den bereits oben zum Teil angesprochenen Maßnahmen, nämlich in dem Pyrolyserohr eine Schneckenwelle vorzugsehen, welche den Wärmeübergang zwischen dem heißen Inertgas und dem Pyrolysegut verbessert, ferner bereits eine Vorseparation der Feststoffanteile bewirkt.

Der Niedertemperaturofen besitzt weiterhin eine Gasableitung, die mit einem Verbrennungsofen verbunden ist. Der Verbrennungsofen ist mittels einer Gasrückführleitung mit dem Pyrolysereaktor verbunden, so daß die Gase in einem Kreislauf zu führen sind. Eine Teilmenge der bei der Verbrennung entstehenden Gase wird aus dem Prozeß ausgeschleußt und einer Nachverbrennung zugeführt.

Bevorzugt werden die bei der Pyrolyse, insbesondere Niedertemperaturpyrolyse entstehenden, zur Aktivkohle aufbereiteten Kohlenstoffanteile in Aktivkohlefiltern oder beispielsweise zur Sickerwasserreinigung verwendet. Die Aufbereitung der Aktivkohle kann mit konventionellen Verfahren durchgeführt werden.

Anders als nach den bisher nach dem Stand der Technik bekannten Verfahren, wo die Pyrolysereststoffe allenfalls als Brennstoff genutzt werden, kann nach der vorliegenden Erfindung die kohlenstoffreiche Pyrolyserestfraktion wieder verwendet werden, und zwar als Aktivkohle. Das Verfahren setzt lediglich voraus, daß zur Aktivkohleerzeugung als Ausgangsprodukte zellulosehaltige Edukte, wie z.B. Getränkekartons, Nachfüllpackungen von Waschpulver, Weichspüler etc., Papier und Pappe, Tapeten, Lebensmitteltransportverpackungen, wie z.B. Pizzaverpackungen oder sonstige Warmhaltepackungen, oder Reststoffe aus der Styroporaufbereitung eingesetzt werden. Diese Ausgangsstoffe sollten nach Möglichkeit schwermetall- und halogenfrei sein, da Schwermetalle die Qualität der erhaltenen Aktivkohle negativ beeinflußt und Halogene durch eine Abgasreinigung ausgewaschen werden müßten. Die vorgenannten Ausgangsstoffe sind Verbundstoffe aus mindestens zwei Materialien. Der Kunststoffanteil wird überwiegend verschwelt und trägt zur Heizwerterhöhung des Pyrolysegases bei. Der übrige Anteil wird in Kohlenstoff umgewandelt, wobei der teilweise hohe Füllstoffanteil in den genannten Kunststoffen einen positiven Effekt auf das erhaltene Kohleprodukt ausübt. Die Füllstoffe sind nämlich meist anorganisch, wie z.B. Kreide, Talkum etc.. Diese Stoffe bleiben bei der Aktivierung der Kohle zur Aktivkohle erhalten und tragen hierdurch zu einer erhöhten massebezogenen Ausbeute bei. Völlig unbedenklich ist jedenfalls die Verarbeitung der Kunststoffe bzw. Kunststoff enthaltenden Verbundverpackungen, die mit dem "grünen Punkt" gekennzeichnet sind.

Bei Verbundverpackungen, bei denen noch Metalle erhalten sind, wie Getränkekartons, Pizzaverpackungen etc., kann das Metall als Wertstoff zurückgewonnen werden. Dieses Verfahren ist im Prinzip nach dem Stand der Technik bekannt.

Neben der Sieb-Rüttelanlage kann die Trennung der Metalle auch mittels Magnetabscheider (zur Separation der Eisenmetalle) oder durch Wirbelstromabscheider (zur Separation der Aluminiumbestandteile) erzielt werden.

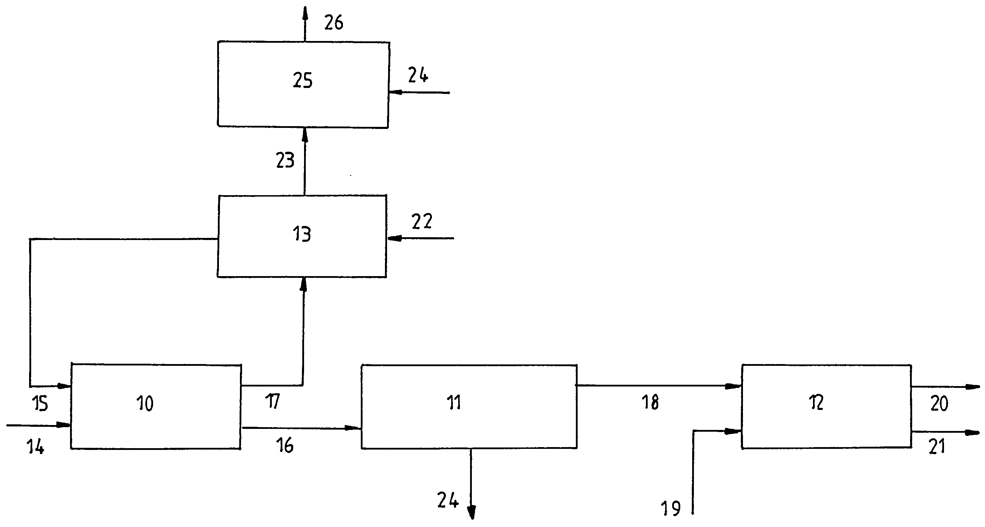

Ein Ausführungsbeispiel der Erfindung ist in der einzigen Figur dargestellt, die ein Verfahrensschema der erfindungsgemäßen Niedertemperaturpyrolyse und der Anordnung der Vorrichtungen zeigt.

Die wesentlichen Bestandteile der erfindungsgemäßen Vorrichtung sind der rohrförmige Niedertemperaturpyroylseofen 10 mit einer innenliegenden entsprechend angepaßten Schneckenwelle als Durchlaufförderer, ferner die Trennstufe 11 in Form eines Rüttel- oder Schwingsiebes sowie die Aktivkohleaufbereitungsvorrichtung 12 und der Ofen 13 zur Verbrennung der gasförmigen Pyrolyseprodukte.

In den Niedertemperaturpyrolysereaktor 10 werden Verbundverpackungen 14 sowie ein Inertgas 15, z.B. in Form von Kohlendioxid, und Wasserdampf aus der Verbrennung des Ofens 13 bei Temperaturen zwischen 420°C und 450°C zugeführt. Bei der Pyrolyse fallen Feststoffe 16 in Form von Aluminium und Kohleprodukten an, ferner das durch Kohlenwasserstoffe angereicherte Inertgas 17, das dem Ofen 13 zugeführt wird. Die Feststoffe werden über das Sieb 11 geführt, wo infolge der größeren Sprödigkeit die Kohlefraktion 18 abgesiebt und einer Aktivkohleaufbereitung zugeführt wird, bei der im wesentlichen Wasserdampf 19 benötigt wird. Die entstehenden Produkte 20, 21 sind zum einen die Aktivkohle 20 selbst als auch verbleibende, ggf. bei der Aktivkohleaufbereitung entstehende angereicherte Wasserdampfgase 21.

Dem Ofen 13 wird nur eine solche Menge an Sauerstoff 22 zugeführt, wie zur Verbrennung benötigt wird, ohne daß hierbei ein Sauerstoffüberschuß existiert, damit über das Inertgas 15 kein Sauerstoff in den Pyrolyseprozeß bzw. das Pyrolyserohr 10 getragen wird. Die überschüssigen Gase werden aus dem Prozeß ausgeschleust und müssen noch über eine sauerstoffreiche Nachverbrennung laufen.

Die über das Schwingsieb 11 weitergeführten Aluminiumbestandteile werden als Feststofffraktion 24 ausgeschleust und unmittelbar einer Wiederverwertung zugeführt.

Bei einem Probelauf sind bei einer Tonne Verbundverpackungen als Wertstoffe ca. 250 kg Aktivkohle und 100 kg Aluminium neben 550 kg heizwertreichen Gasen gewonnen worden.

## Patentansprüche

1. Verfahren zur Behandlung von Verbundverpackungen, Kunststoffabfällen, Altpapier und/oder Papier-Kunststoff-Verbundmaterial mittels Pyrolyse und anschließender Trennung der festen Pyrolysereststoffe von der Metallfraktion,
**dadurch gekennzeichnet**,
daß die verbleibenden Pyrolysereststoffe kohlenstoffreiche Fraktion zu Aktivkohle aufbereitet werden.

2. Verfahren nach Anspruch 1, dadurch gekennzeichnet, daß die Metallfraktion und die verbleibende kohlenstoffreiche Fraktion durch Sieben, vorzugsweise mittels einer kontinuierlichen Förderung über ein Rüttel- oder Schwingsieb, oder durch Magnetabscheidung und/oder durch Wirbelstromabscheidung getrennt werden.

3. Verfahren nach Anspruch 1 oder 2, dadurch gekennzeichnet, daß die Pyrolyse bei Temperaturen von maximal 450°C, vorzugsweise zwischen 420°C bis 450°C, durchgeführt wird.

4. Verfahren nach einem der Ansprüche 1 bis 3, dadurch gekennzeichnet, daß das Pyrolysegut (14) während der Pyrolyse homogenisiert und zerkleinert wird.

5. Verfahren nach Anspruch 4, dadurch gekennzeichnet, daß das Pyrolysegut (14) während der Pyrolyse mittels eines Schneckenförderers durch ein Pyrolyserohr (10) transportiert wird.

6. Verfahren nach einem der Ansprüche 1 bis 5, dadurch gekennzeichnet, daß die gasförmigen Pyrolyseprodukte (17) mit Luftsauerstoffunterschuß (22) in einem Ofen (13) verbrannt und unter Rückführung der entstehenden Wärme sowie als Inertgas teilweise im Pyrolyseprozeß eingesetzt werden.

7. Verfahren nach Anspruch 6, dadurch gekennzeichnet, daß die bei der Verbrennung der gasförmigen Pyrolyseprodukte (17) unter Luftsauerstoffmangel entstehenden Gase teilweise als Inert- und/oder Heizgas in den Pyrolyseprozeß zurückgeführt werden.

8. Verfahren nach Anspruch 6 oder 7, dadurch gekennzeichnet, daß die überschüssigen Gase (23) aus dem Prozeß ausgeschleust und mit Luftsauerstoffüberschuß (24) in einer Nachverbrennung (25) verbrannt werden.

9. Vorrichtung zur Durchführung des Verfahrens nach einem der Ansprüche 1 bis 8, dadurch gekennzeichnet, daß einem Pyrolyseofen (10) ein Rüttel- oder Schwingsieb (11) oder ein Magnet- und/oder Wirbelstromabscheider nachgeschaltet ist/sind.

10. Vorrichtung nach Anspruch 9, dadurch gekennzeichnet, daß der Pyrolyseofen (10) aus einem feststehenden Rohr mit einer Schneckenwelle besteht.

11. Vorrichtung nach Anspruch 9 oder 10, dadurch gekennzeichnet, daß der Pyrolyseofen (10) ein Niedertemperaturofen mit einer Gasableitung (17) ist, die mit einem Verbrennungsofen (13) verbunden ist.

12. Vorrichtung nach Anspruch 11, dadurch gekennzeichnet, daß der Verbrennungsofen (13) mittels einer Gasrückführleitung mit dem Pyrolyseofen (10) verbunden ist, so daß die Gase (17, 15) in einem geschlossenen Kreislauf führbar sind.

13. Verwendung der bei der Pyrolyse, insbesondere Niedertemperaturpyrolyse entstehenden, zur Aktivkohle (20) aufbereiteten Feststoffanteile (18) in Aktivkohlefiltern oder zur Wasserreinigung.
